# EUROPEAN PATENT APPLICATION

(11) **EP 2 733 868 A1**
(43) Date of publication of application: **21.05.2014**
(21) Application number: 13193152.9
(22) Date of filing: 15.11.2013
(51) Int. Cl.: H04B 10/11

(54) **Method of detection and transmission of light signals through an optical antenna**

(30) Priority: 15.11.2012 CH 23902012
(71) Applicant: Pasquali, Alessandro, 6826 Riva San Vitale (CH)
(72) Inventor: Pasquali, Alessandro, 6826 Riva San Vitale (CH)
(74) Representative: Zardi, Marco

(57) **Abstract**

The invention illustrates the method for processing optical signals by means of an optical antenna (A). By using an optical antenna it is possible to simplify the process for production of the final apparatus and achieve a greater versatility thereof.

## Description

### Field of application

Telecommunications.

### Prior Art

At present opto-electronic apparatus which make use of light diffused in the environment use optical transducers which detect or send the signal directly.

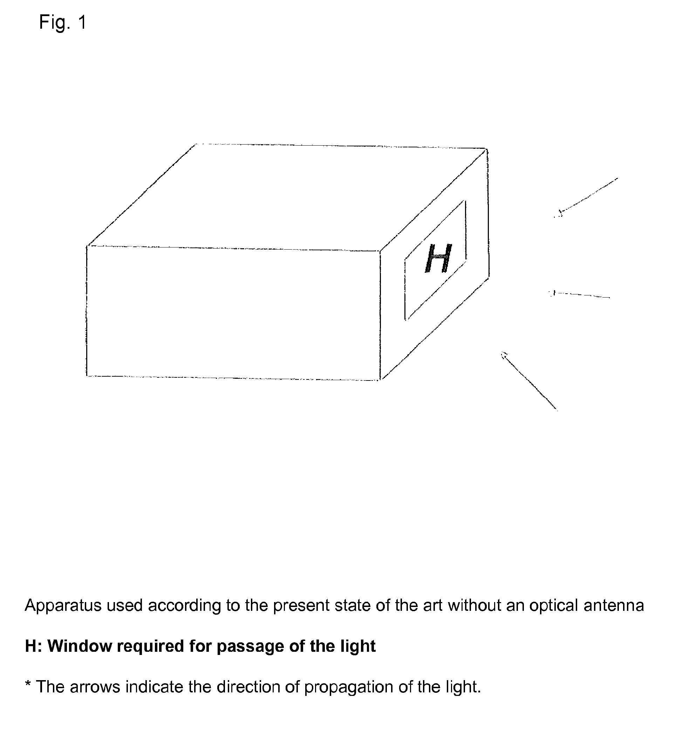

As shown in Figure 1, the design of the apparatus must therefore envisage a "window" which allows the light rays to pass through. The use of a window results in the loss of omnidirectionality during reception/transmission of the signals and requires a laborious method for manufacture thereof.

### Summary of the invention

By using an optical antenna the capacity for processing signals in any direction is restored and savings are achieved with regard to the cost of manufacture of the apparatus.

The present invention solves the abovementioned problem by means of an antenna able to receive or transmit light. The problem is also solved by an apparatus or device comprising an antenna of the abovementioned type, characterized in that the antenna projects or stands out from a surface of the apparatus so as to receive or transmit light signals in all directions.

The apparatus comprises an optical sensor connected to the antenna and designed to receive a signal associated with the light captured by the antenna and/or transmit a signal via the antenna.

The aforementioned problem is also solved by a reception/transmission method characterized by the reception and transmission of light associated with a signal by means of an optical antenna mounted so as to project or stand out from a transceiver apparatus.

### Brief description of the drawings

Figure 1 represents an apparatus with a window according to the prior art;
Figures 2-4 represent an apparatus with an antenna according to the present invention.

### Description of the invention

As explained in the introduction, this method can be used both for transmission and reception.

Let us consider, for example, an apparatus for receiving audio signals.

A light source irradiates the signal, and the optical transducer of a receiver placed at a distance detects the signal transported by the light. As shown in Figure 1, according to the present state of the art, reception of the signal is dependent upon the direction of exposure of the window "H".

It can be seen that, when using this apparatus, it must have a constant and given orientation towards the light source.

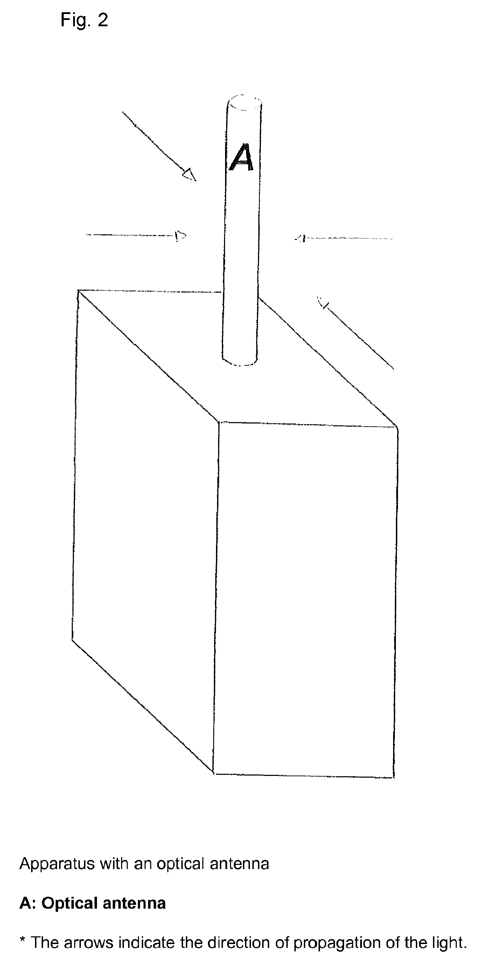

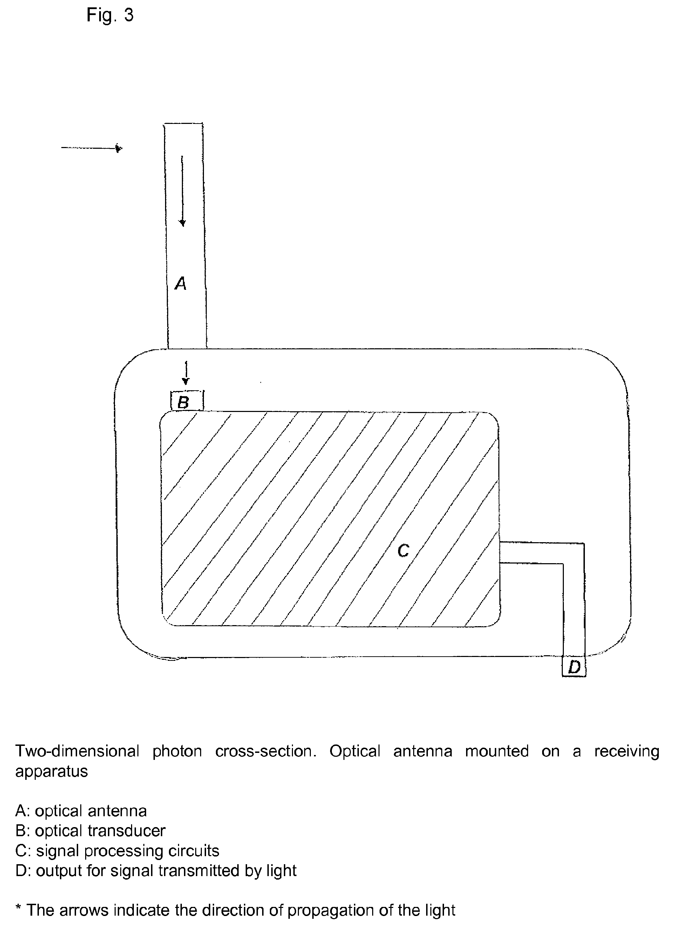

Figures 2 and 3 illustrate application of the invention: these figures show the same kind of apparatus as that shown in Figure 1, but with use of the optical antenna "A". This antenna is able to capture in all directions the light from the source and convey it internally for detection.

The method envisages, for its implementation, the use of those materials which, when struck by light photons, are able to propagate light and generate an effect which can be detected by an optical transducer. The choice of material and the form of the antenna are defined depending on the constructional requirements.

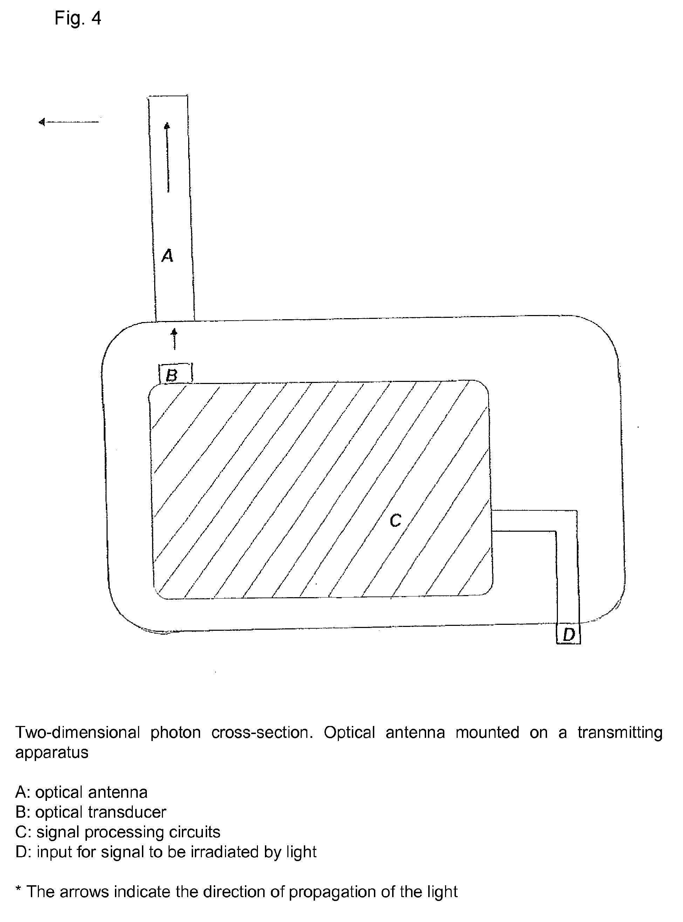

Figure 4 shows application during transmission: using an optical antenna, the transmitting optical transducer irradiates its signal with a coverage of 360 degrees.

## Claims

1. Protection is claimed for a method which envisages the use of one or more antennas which, when receive light, are able to generate an effect which can be detected by an optical sensor (reception).

2. Protection is claimed for a method for diffusion of optical signals by means of the use of optical antennas (transmission).

3. Antenna suitable for receiving or transmitting light.

4. Apparatus or device comprising an antenna according to claim 3, **characterized in that** the antenna projects or stands out from a surface of the apparatus for receiving or transmitting light in all directions.

5. Apparatus according to claim 4, **characterized in that** it comprises an optical sensor connected to the antenna and configured to receive a signal associated with the light captured by the antenna and/or transmit a signal associated with the light transmitted by the antenna.

6. Method to receive/transmit, **characterized by** the reception and transmission of light associated with a signal by means of an optical antenna projecting or standing out from a transceiver apparatus.
